# EUROPEAN PATENT APPLICATION

(11) **EP 1 868 281 A2**
(43) Date of publication of application: **19.12.2007**
(21) Application number: 07110307.1
(22) Date of filing: 14.06.2007
(51) Int. Cl.: H02K 5/16, H02K 5/22, G11B 19/00

(54) **DC motor and attachment structure of DC motor**

(30) Priority: 15.06.2006 JP 2006165765
(71) Applicant: Sony Corporation, Tokyo (JP); Minebea Motor Corporation, Meguro-ku Tokyo (JP)
(72) Inventor: Takizawa, Kazuyuki, Tokyo (JP); Kumeda, Kazuyuki, Tokyo (JP); Miyazako, Hiroshi, Tokyo (JP)
(74) Representative: Körber, Martin Hans

(57) **Abstract**

A DC motor including: a substantially cup-shaped housing (80); and an attachment board (91) which closes an opening of the housing, and to which the motor is attached in a predetermined position; wherein the board has a fitting portion (95) which is provided at a central part of this board, and to which a bearing on one side of a rotor shaft placed in the housing is fitted, and an arm (92) formed protruding in a radial direction at an outer circumferential part of the attachment board, and fastened to an attachment member.

## Description

### CROSS REFERENCES TO RELATED APPLICATIONS

The present invention contains subject manner related to Japanese Patent Application JP 2006-165765 filed in the Japan Patent Office on June 15, 2006, the entire contents of which being incorporated herein by reference.

### BACKGROUND OF THE INVENTION

### Field of the Invention:

The present invention relates to a DC motor and an attachment structure thereof, especially to a DC motor formed of a brush motor in which an electric current to a rotor coil is switched by a commutator, and an attachment structure thereof.

### Description of the Related Art:

For example, when a signal recorded in an optical disk such as a CD (compact disk) is reproduced or a signal is recorded, the above-mentioned optical disk is rotationally driven by a turntable, that is, by a spindle motor and a signal is read out or written by an optical pickup movable in a radial direction with respect to the above-mentioned optical disk.

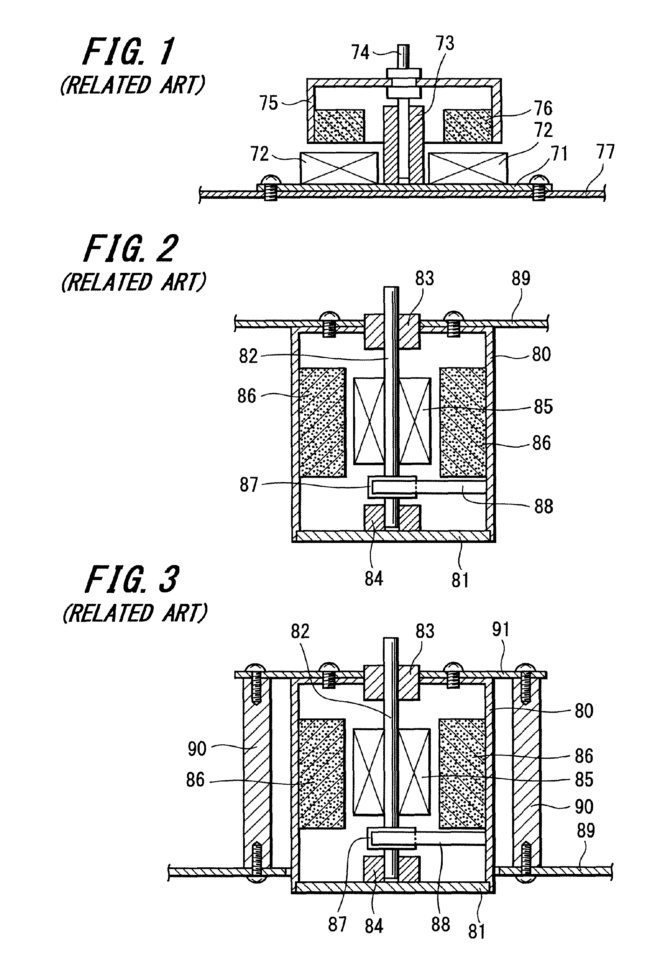

For the rotational driving of an optical disk like this, a DC brushless motor disclosed in Publication of examined utility model application Heisei No. 5-21980 has been used, for example. An attachment structure of a brushless motor like this is shown, for example, in FIG. 1. The brushless motor includes an attachment board 71, and a plurality of stator coils 72 are disposed on this board 71. And a bearing 73 is fastened to the midpoint between the coils 72 on the attachment board 71. A rotor shaft 74 is supported by the bearing 73 in a rotatable manner. Additionally, a rotor yoke 75 is fastened to the rotor shaft 74, and a magnet 76 is fastened to a part on the inner circumferential side of this rotor yoke 75. The board 71 is fixed on the upper surface of a chassis, namely of an attachment member 77, by machine screws or the like.

Regarding a structure in which the bearing 73 is provided on the board 71 and this board 71 is attached to the chassis 77 thereunder in this manner, the rotational position of the magnet 76 is detected by a magnetic sensor, and an electric current applied to the coils 72 is switched according to the detection; therefore, a commutator and a brush are not necessary, which makes it possible to support the rotor shaft 74 in a rotatable manner solely by the bearing 73 on the lower side, and thus it is only necessary to provide the board 71 on the lower side, which makes a structure such as is shown in FIG. 1 more feasible. However, brushless motors require magnetic sensors, thereby raising costs.

Meanwhile, in the case of a DC brush motor in which an electric current to a rotor coil is switched by a commutator and a brush, a magnetic sensor is not necessary, but it may be necessary to support both ends of a rotor shaft in a rotatable manner by bearings, and so bearings vertically separated may have to be used; therefore, a structure such as is shown in FIG. 1 may be impossible to employ.

Accordingly, in the case of a DC brush motor, the attachment structure shown in FIG. 2 is employed, for example. This brush motor includes a housing 80 shaped like a cylinder whose one end is closed, in other words virtually shaped like a cup, and a bottom opening thereof is closed by a board, that is by a bottom board 81. The upper and lower ends of a rotor shaft 82 are supported in a rotatable manner by a bearing 83 attached to a central part on the upper surface of the housing 80 and by a lower bearing 84 attached to an approximately central part on the upper surface of the bottom board 81. A rotor coil 85 is attached to the rotor shaft 82, and a magnet 86 is stationarily placed on the outer circumferential side of this rotor coil 85, being attached to the inner circumferential surface of the housing 80.

An electric current applied to the rotor coil 85 attached to the rotor shaft 82 is switched by a commutator 87 and a brush 88: when the rotor coil 85 is rotated along with the rotor shaft 82, an electric current applied to the rotor coil 85 is switched by the commutator 87 and the brush 88 according to the rotation. Regarding the attachment of such a motor, the upper surface of the housing 80 is attached to a chassis 89 by machine screws.

The structure in FIG. 2 indicates direct attachment of a brush motor to the chassis 89 positioned on the upper side; if attached to the chassis 89 on the lower side, however, the structure shown in FIG. 3 may have to be employed, for example. Specifically, in the case of a brush motor with an attachment board 91 installed on its upper surface, a structure in which an attachment boss 90 is placed in an upright position on the chassis 89 positioned on the lower side, and the attachment board 91 is fixed with machine screws by means of this attachment boss 90 is to be employed. Here, the internal configuration of the brush motor shown in FIG. 3 is the same as that of the brush motor shown in FIG. 2.

As just described, if a brush motor is attached to a chassis on the lower side, it may be necessary to support it by means of the attachment boss 90 as shown in FIG. 3; thus, the number of components increases and so there is a rise in costs. Moreover, such an attachment structure is defective in that there is not much attachment accuracy of a motor to the chassis 89. Also, regarding ordinary brush motors, they are intended to be attached to the upper side as shown in FIG. 2, so that pendent-style attachment is common. Here, the inclination of the rotor shaft 82 is controlled on the basis of the housing 80, so that the structure shown in FIG. 3 in which attachment is conducted using the attachment board 91 and the attachment boss 90 is defective in that the verticality of the rotor shaft 82 with respect to the chassis 89 on the lower side may not be able to be accurately controlled.
[Patent Document 1] Publication of examined utility model application Heisei No. 5-21980
[Patent Document 2] Publication of unexamined utility model application Heisei No. 2-65070

### SUMMARY OF THE INVENTION

It is desirable to provide a DC motor and an attachment structure thereof, without needing an attachment component such as an attachment boss, and thus making it possible to reduce the number of components.

Also, it is desirable to provide a DC motor and an attachment structure thereof, wherein the positioning of a shaft of a motor can be accurately performed, and precision can therefore be raised.

Further, it is desirable to provide a DC motor and an attachment structure thereof, wherein even after a motor has been assembled, the verticality of a shaft can be adjusted with ease, and assembly precision can therefore be raised.

Furthermore, it is desirable to provide a DC brush motor which is inexpensive and able to be attached with high precision, and an attachment structure thereof.

The above-mentioned desirable provisions and other desirable ones according to an embodiment of the present invention will be specified by technical ideas of the present invention and embodiments thereof described below.

A primary invention according to the present application relates to a DC motor including: a substantially cup-shaped housing; an attachment board which closes an opening of the housing, and to which the motor is attached in a predetermined position; a fitting portion which is provided at an approximately central part of the board, and to which a bearing on one side of a rotor shaft placed in the housing is fitted; and an arm formed protruding in a radial direction at an outer circumferential part of the attachment board, and fastened to an attachment member.

Here, the arm is allowed to be bent in its middle position with respect to a longitudinal direction, and the inclination of the rotor shaft is allowed to be corrected according to the curvature amount of the arm. Also, a commutator is allowed to be attached to the rotor shaft, the rotor shaft is allowed to be rotatably supported by bearings at both ends with respect to a longitudinal direction thereof, and one bearing is allowed to be attached to the attachment board while the other bearing is allowed to be attached to the housing. Also, a circular positioning hole or a depressed portion is allowed to be formed in an attachment member such as a frame where the motor is attached, and the position of a central part is allowed to be decided as an outer circumferential part of the fitting portion of the attachment board is fitted into the circular positioning hole or the depressed portion of the attachment member. In addition, an end side of the outer circumferential part of the fitting portion of the attachment board is allowed to be formed of an inclined surface.

A primary invention concerning an attachment structure is an attachment structure of a DC motor in which there is a rotor shaft whose both ends with respect to a longitudinal direction are supported by bearings, and a rotor and a commutator are provided between bearings at both ends of the rotor shaft. It is also an attachment structure of a DC motor, wherein one of the bearings at both ends is attached to a housing and the other attached to an attachment board which closes an opening of the housing; furthermore, an arm placed contiguously to the attachment board in such a manner as to protrude at an outer circumferential part with respect to a radial direction is attached to an attachment member(mounting plate).

Here, the one bearing is allowed to be fitted in a central hole of the housing, and the other bearing is allowed to be fitted in a fitting portion of the attachment board. Also, bent in its middle position to correct the inclination of the rotor shaft, the arm is allowed to be installed in the attachment position of the mounting plate. Also, there is allowed to be a projection formed in the attachment position of the mounting plate, and height adjustment is allowed to be made according to the protrusion amount of the projection. In addition, the DC motor is allowed to be a spindle motor which directly drives a disk-like recording medium.

The present invention relates to a DC motor and an attachment structure thereof, especially to a brush motor in which an electric current applied to a rotor coil is switched by means of a commutator and a brush, and an attachment structure thereof. This kind of motor in related art is supposed to be employed in a pendent state, so that a female screw hole for attachment is formed in the upper surface of the motor. In the present invention, as opposed to the foregoing, there is provided a structure in which the attachment position of a motor to a mounting plate on a lower surface can be accurately worked out and, moreover, the verticality adjustment of a rotor shaft is easy. Note that a configuration in which a bearing is formed on an attachment board on the lower side, and this attachment board is attached to a mounting plate on a lower surface has been on the market in the past as well. Specifically, not needing a brush or a commutator, a brushless motor can employ the above-mentioned structure by attaching a bearing only to the attachment board on the lower side. However, this kind of structure may not be able to be applied to a DC brush motor having a commutator and a brush.

In a preferred embodiment of the present invention, a DC brush motor in which radial bearings holding both ends of a rotor shaft are separated from each other between a housing and an attachment board on the lower side; wherein the upper bearing is attached to the housing while the lower bearing is attached to the attachment board; moreover, in order to decide the central position of this motor accurately, a fitting portion corresponding to the center of the shaft is provided in the attachment board, and the positioning is conducted by an outer circumferential part of this fitting portion. Also, in order to make it possible to adjust the verticality of the rotor shaft, on the attachment board are extended a plurality of arms toward the outer circumferential side in radial directions, and the verticality precision of the rotor shaft can be raised by utilizing the curvature of the midpoints of these arms.

According to the embodiment, it is made possible to use a low-priced DC brush motor as a spindle motor for driving an optical disk, for example, and a reduction in costs is thus achieved. Also, an attachment boss and a middle attachment board are not necessary, and the number of components is thus reduced. Also, since the positioning of the motor shaft can be accurately decided, precision can be improved. In addition, even after the motor has been assembled, the inclination of a rotor shaft can be adjusted with ease, thereby facilitating control of the verticality of the rotor shaft, and improving assembly precision.

A primary invention according to the present application relates to a DC motor includes: a cylindrical, substantially cup-shaped housing whose one end is closed; an attachment board which serves also as a lid closing an opening of the housing, and to which the motor is attached in a predetermined position; a fitting portion which is provided at an approximately central part of the attachment board, and to which a bearing on one side of a rotor shaft placed in the housing is fitted; and an arm formed protruding in a radial direction at an outer circumferential part of the attachment board, and fastened to an attachment member.

Therefore, according to such an attachment structure, it is only necessary to install an attachment board in the attachment position of an attachment member such as a mounting plate, and thus the attachment structure is simplified. Also, a middle attachment component such as an attachment boss is not required, and thus the number of components can be reduced.

A primary invention concerning an attachment structure is an attachment structure of a DC motor in which there is a rotor shaft whose both ends with respect to a longitudinal direction are supported by bearings, and a rotor and a commutator are provided between bearings at both ends of the rotor shaft. It is also an attachment structure of a DC motor, wherein one of the bearings at both ends is attached to a housing and the other attached to an attachment board which serves also as a lid closing an opening of the housing; furthermore, an arm placed contiguously to the attachment board in such a manner as to protrude in an outer circumferential part with respect to a radial direction is attached to an attachment member(mounting plate).

Therefore, according to such an attachment structure of a DC motor, an arm placed contiguously to an attachment board is installed in the attachment position of a mounting plate, and a DC motor is thus attached to the mounting plate, so that it is made possible to provide a very simple attachment structure.

### BRIEF DESCRIPTION OF THE DRAWINGS

FIG. 1 is a longitudinally sectional view of main parts, showing attachment of a brush motor in related art.
FIG. 2 is a longitudinally sectional view of main parts, showing attachment of a DC brush motor in related art.
FIG. 3 is a longitudinally sectional view of main parts, showing attachment of a DC brush motor in related art attached to a chassis on the lower side.
FIG. 4 is a front elevational view of an instrument panel of an automobile, in which a disk player has been fitted.
FIG. 5 is a perspective view of main parts of a disk player.
FIG. 6 is a block diagram showing a system configuration of a disk player.
FIG. 7 is a block diagram showing a system configuration of a playback unit of a disk player.
FIG. 8 is a perspective view of main parts of a changer mechanism of a disk player.
FIG. 9 is a longitudinally sectional view of main parts of the changer mechanism.
FIG. 10 is a plan view of main parts, showing the inside of a changer mechanism.
FIG. 11 is a longitudinally sectional view of a changer mechanism in a state of performance.
FIG. 12 is a plan view of main parts, in relation to FIG. 11.
FIG. 13 is a plan view of a chassis including a spindle motor and a supporting arm on which an optical pickup has been mounted.
FIG. 14 is a longitudinally sectional view of a spindle motor.
FIG. 15 is an exploded perspective view of a housing of the spindle motor.
FIG. 16 is a longitudinally sectional view of main parts, showing an attachment structure of a spindle motor.
FIG. 17 is an enlarged sectional view of main parts, showing a positioning structure of a central part of a spindle motor.
FIG. 18 is an enlarged sectional view of main parts of an attachment structure serving also as a mechanism for preventing a rotor shaft of a spindle motor from inclining.

### DESCRIPTION OF THE PREFERRED EMBODIMENTS

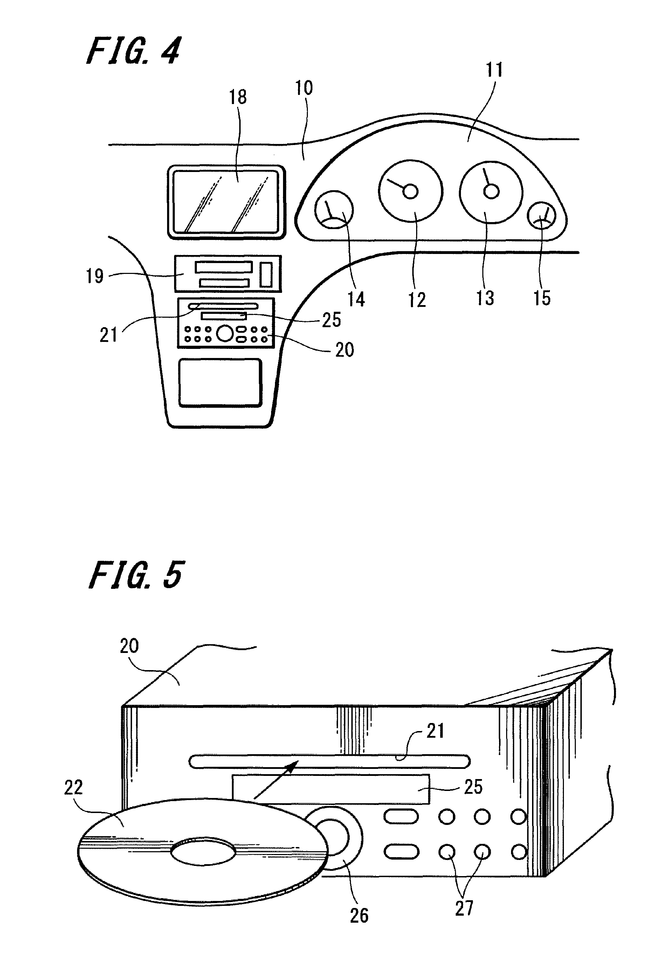

The following explains the present invention with reference to one embodiment shown in the drawings. FIG. 4 shows an instrument panel 10 at the front inside an automobile with a disk player according to one embodiment of the present invention. A part to the right of the instrument panel 10 and also in front of a driver's seat is provided with a meter attachment portion 11; and on this meter attachment portion 11 are disposed some required meters such as a tachometer 12 indicating the rate at which an engine turns, a speedometer 13 indicating the speed of the automobile, a fuel gauge 14 indicating how much fuel is left, and a temperature gauge 15 indicating the temperature of cooling water in the engine.

In a position which is to the left of the meter attachment portion 11 and also which corresponds with the midpoint between the driver's seat and a passenger seat on the above-mentioned instrument panel 10 is installed a display 18. The display 18 forms a display means of a car navigation apparatus. A control panel 19 is placed thereunder, and an in-car air conditioner is controlled by means of this control panel 19. A disk player 20 is fitted under the control panel 19; by inserting an optical disk 22 (see FIG. 5) through a laterally long slot 21 provided at an upper part of this disk player 20, an audio signal written onto this optical disk 22 is reproduced, and music can be played back inside the automobile.

FIG. 5 shows the disk player 20 playing back a disk-like recording medium which is a CD as one example; regarding this disk player, there is a display portion 25 provided on its front panel and also under the laterally long slot 21; and display necessary for the inserting of the optical disk 22, or display of the name of a disk inserted, the name of a tune when being played back and the like is conducted by this display portion 25. An operational knob 26 and operational buttons 27 are installed under the display portion 25.

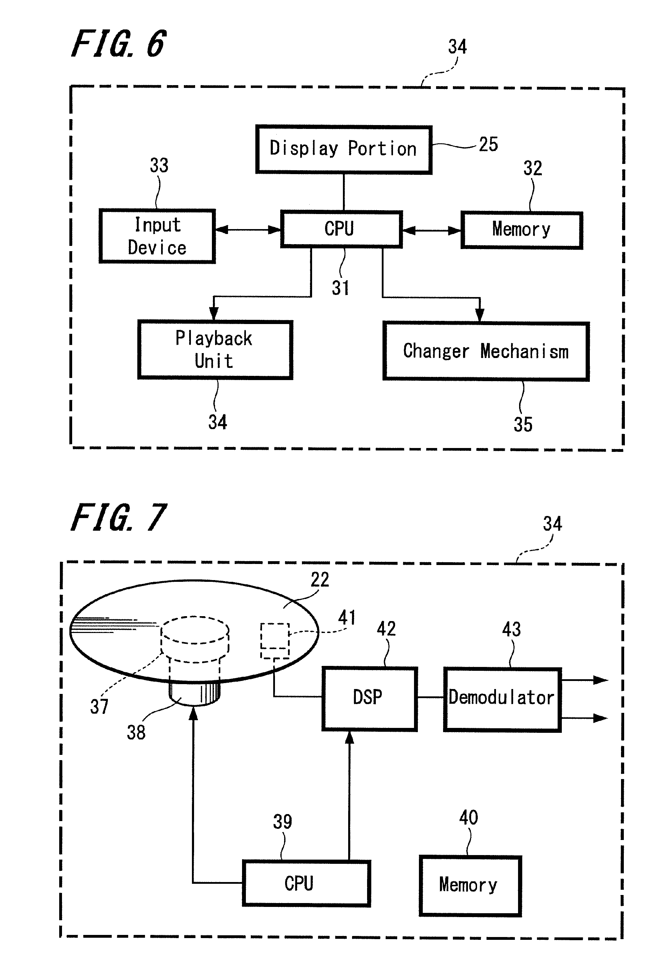

FIG. 6 shows the overall configuration of the disk player 20 in particular; this disk player 20 incorporates a CPU 31, and a memory 32 is connected to this CPU 31. Further, the CPU 31 is provided with an input device 33. An operational unit of this input device 33 is represented by the operational knob 26 and the operational buttons 27 of the front panel. In addition, this CPU 31 is provided with a playback unit 34, and the optical disk 22 is played back in this playback unit 34. Further, the disk player 20 incorporates a changer mechanism 35 by which to choose from a plurality of optical disks 22.

FIG. 7 shows the configuration of the playback unit 34 of the above-mentioned disk player 20. This playback unit 34 incorporates a turntable 37, directly driven by a motor 38. The optical disk 22 inserted through the slot 21 is installed on the turntable 37 and then rotationally driven. Also, the motor 38 is controlled by a CPU 39. A memory 40 is connected to the CPU 39. Also, this playback unit 34 incorporates an optical pickup 41, and a signal written onto a surface of this optical disk 22 is read out as this optical pickup 41 moves in a radial direction with respect to the optical disk 22 rotating. After being signally processed by a DSP (digital signal processor) 42, the signal read out by the optical pickup 41 is demodulated by a demodulator 43 and provided to output equipment as an audio output or video output.

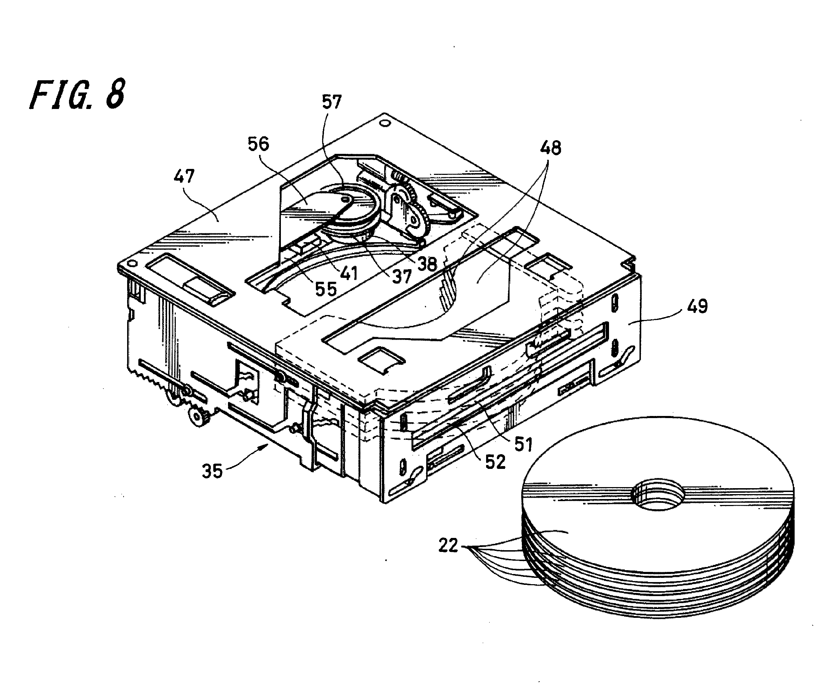

Next, the structure of the changer mechanism 35 housed in the disk player 20 will be described with reference to FIGS. 8 to 12. The changer mechanism 35 incorporates a chassis 47 which is flat and shaped like a rectangular parallelepiped, and on this chassis 47 and also near to the front panel side are vertically mounted six trays 48, whereby six optical disks 22 can be installed. A shutter board 49 with an opening formed at a part through which the optical disk 22 is inserted into the tray 48 is provided. And on the inside of the shutter board 49 are provided a pair of loading rollers 51 and 52 vertically disposed, whereby the optical disk 22 can be inserted into or removed from an arbitrary tray of the trays 48.

Also, at a part on the rear side of this changer mechanism 35 are disposed a supporting arm 55 and a pressing arm 56 vertically overlapping. To the upper surface of the supporting arm 55 with respect to an end side thereof are attached the spindle motor 38 and the turntable 37; further, on the supporting arm 55 is mounted the optical pickup 41, and it is movable in a longitudinal direction on the upper surface of the supporting arm 55. Meanwhile, the pressing arm 56 incorporates a chuck 57 on its lower surface with respect to an end side thereof. The chuck 57 conducts a playback operation by vertically sandwiching a selected optical disk from the disks 22, together with the turntable 37.

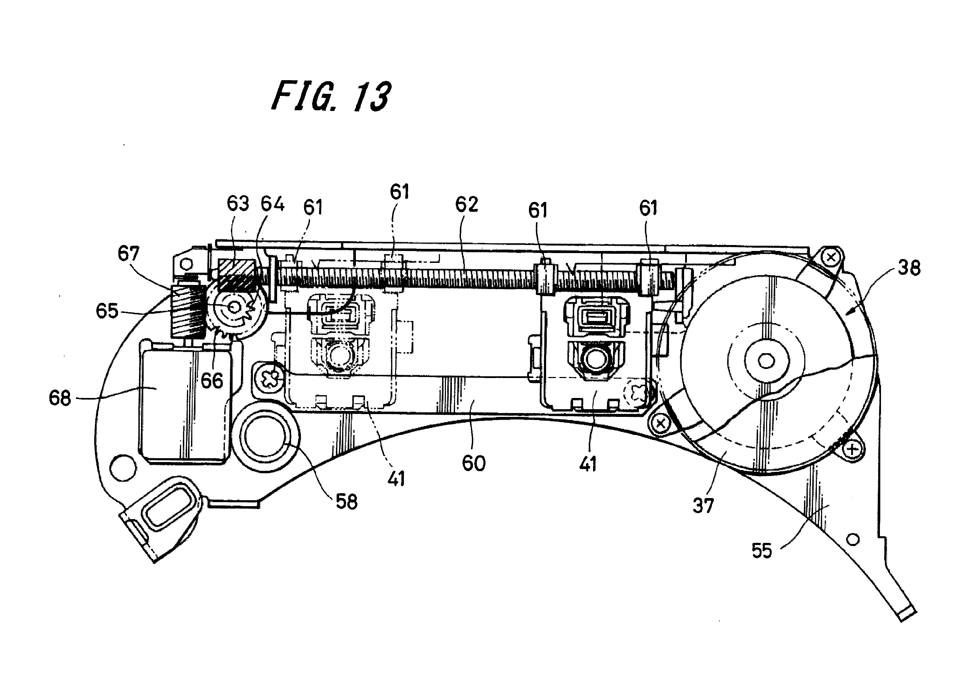

On the supporting arm 55 is provided a moving mechanism of the optical pickup 41 as shown in FIG. 13. The optical pickup 41 is supported by a guide bar 60 in a movable manner in a radial direction of the optical disk 22. Specifically, an engagement portion 61 provided on the cabinet of the optical pickup 41 engages with a lead screw 62. A crossed helical gear 63 is fastened to an end of the feed screw 62, and this crossed helical gear 63 engages with another crossed helical gear 64. The crossed helical gear 64 is joined to a worm wheel 66 by a drive shaft 65. The worm wheel 66 is engaging with a worm 67. And this worm 67 is fastened to an output shaft of a feed motor 68.

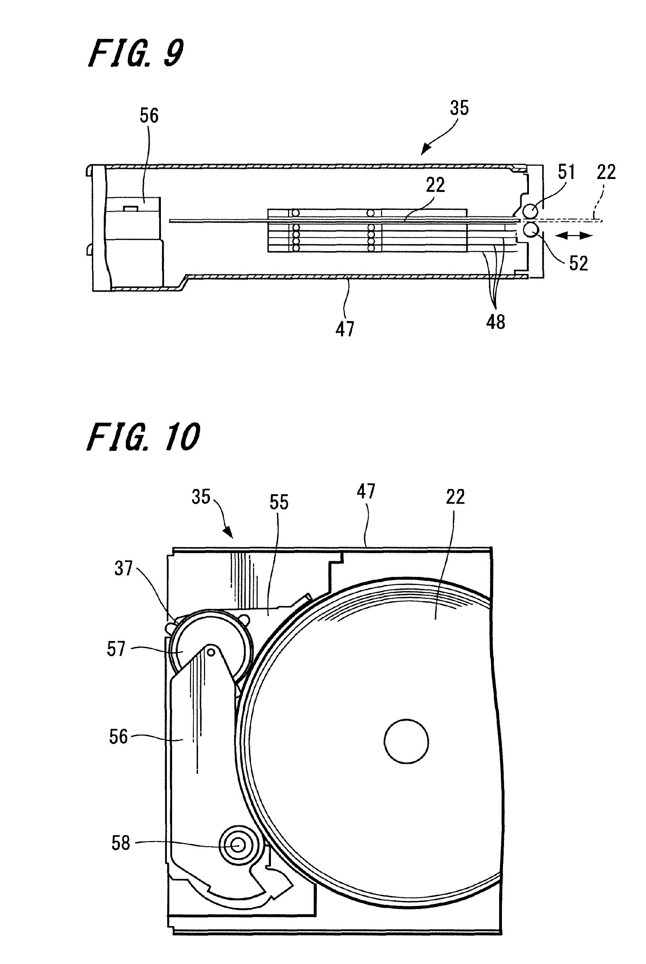

An outline of operation of the changer mechanism 35 is explained. When the optical disk 22 is inserted into the tray 48 and when the optical disk 22 is removed from the tray 48, the supporting arm 55 and the pressing arm 56 retreat to the rear side with respect to a storage space for the optical disk 22, as shown in FIG. 10. With such a state kept, a predetermined tray in the trays 48 is raised to a position corresponding to the slot 21 by cam mechanisms provided on both sides of the chassis 47.

With such a state kept, when the display portion 25 conducts display in relation to insertion on standby, a user inserts the optical disk 22 through the slot 21 and then between the pair of loading rollers 51 and 52 vertically disposed, as shown in FIG. 9. Then the loading rollers 51 and 52 rotate in such a manner as to pull the optical disk 22 toward them, and thus the optical disk 22 is installed on a predetermined tray, for example on a second tray from the top of the trays 48 as shown in FIG. 9. The optical disk 22 is thus installed on an arbitrary tray in the trays 48 of which there is a plurality of trays stacked on top of each other.

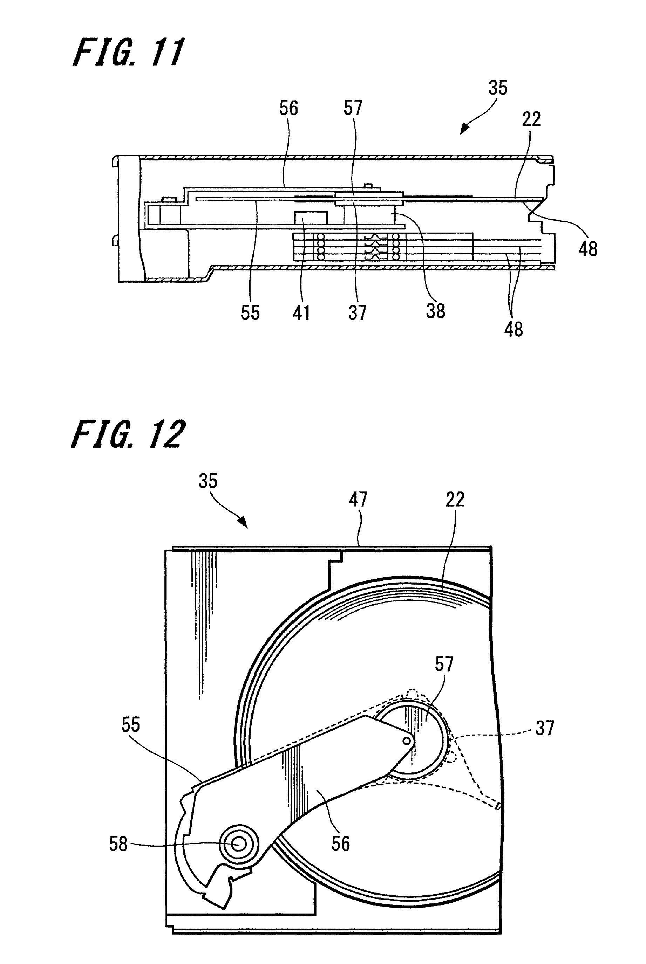

Next, playback operation of the optical disk 22 will be described. Based upon a selective operation of the operational buttons 27 of this disk player 20, the trays 48 are moved in a vertical direction by the cam mechanisms on both sides of the chassis 47 as shown in FIG. 11, and a desired tray in the trays 48 is moved to such a height as enables playback; meanwhile, trays thereover and thereunder are vertically separated from the tray on which the optical disk 22 to be played back has been installed. In such a state, as shown in FIG. 12, the supporting arm 55 and the pressing arm 56 turn to the side of the disk storage space, the optical disk 22 selected is supported by the turntable 37 from below, and the chuck 57 provided on the pressing arm 56 presses a central part of the optical disk 22 from the top.

With such a state kept, the motor 38 drives the turntable 37 with a predetermined rotation speed, and the optical pickup 41 on the supporting arm 55 is moved in a radial direction of the optical disk 22. Specifically, when the feed motor 68 shown in FIG. 13 is driven, the worm wheel 66 is driven by the worm 67, and this worm wheel 66 drives the crossed helical gear 64 via the drive shaft 65. Therefore, the lead screw 62 incorporating the crossed helical gear 63 engaging with this crossed helical gear 64 is rotationally driven, and thus the optical pickup 41 having the engagement portion 61 engaging with this lead screw 62 moves along and on the guide bar 60. Thus, by moving in a radial direction of the optical disk 22, the optical pickup 41 reproduces a signal written onto this optical disk 22.

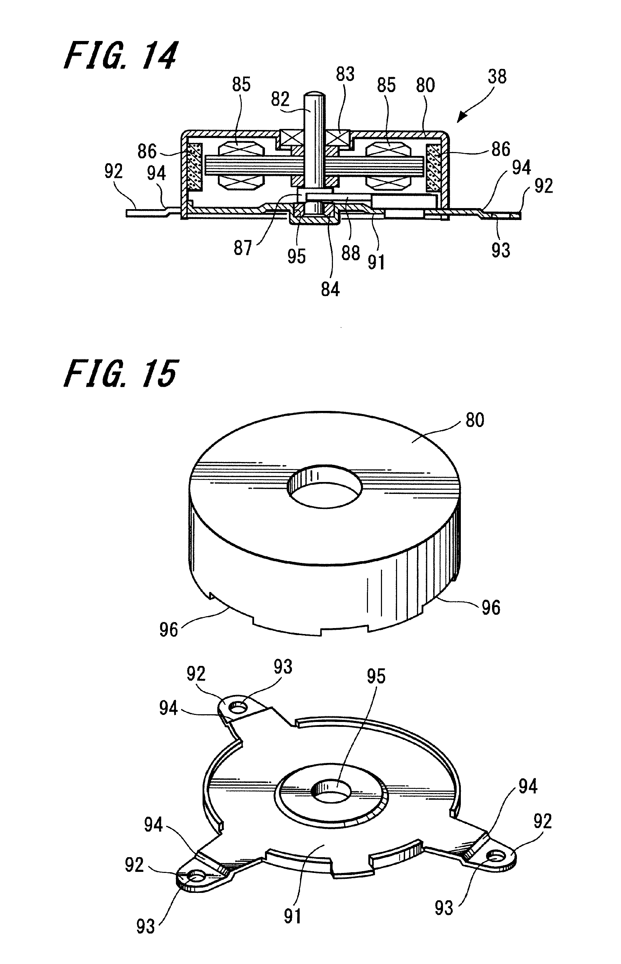

Next, an attachment structure of a spindle motor 38 which drives a turntable 37 of a disk player relating to the structure will be described with reference to FIGS. 14 to 18. An outline of this motor is explained with reference to FIG. 14 as follows: the motor includes a cylindrical, substantially cup-shaped housing 80 whose one end is closed and whose bottom is open; and the lower side of this housing 80 is closed by a disk-like attachment board 91 serving also as a lid. And a rotor shaft 82 is placed in such a manner as to penetrate through a central part of this housing 80 in an axial direction. The rotor shaft 82 is rotatably supported by upper and lower bearings 83 and 84 . Here, the upper bearing 83 is fitted in a circular hole formed at the top on the outside and at a central part of the housing 80. Meanwhile, the lower bearing 84 is fitted to a fitting portion 95 formed at an approximately central part of the attachment board 91.

Regarding the rotor shaft 82 thus rotatably supported by the upper and lower bearings 83 and 84, a rotor coil 85 is wound on a plurality of salient poles of a rotor core formed of a magnetic steel plate, and a commutator 87 is attached to the rotor shaft 82. And the commutator 87 touches a brush 88 in a sliding manner. An electric current applied to the rotor coil 85 is switched by the commutator 87 and the brush 88 according to the rotational position.

Next, an attachment structure of such a motor will be described as follows: three arms 92 extend in a radial direction toward outer parts, by an angle of 120 degrees with each other, for example, at outer circumferential parts of the disk-like attachment board 91 serving also as a lid, below the housing 80; also, machine screw insertion holes 93 are formed in ends of these arms 92. In addition, each of the arms 92 is provided with a bent portion 94 having an inclined surface, in its middle position with respect to a longitudinal direction. Parts on the root side of the arms 92 are fitted to recesses 96 formed on the outer circumferential side and at the bottom of the housing 80. And parts at opening edges on the bottom of the housing 80 and without the recesses 96 undergo caulking, thereby joining the attachment board 91 to the housing 80.

In relation to such a DC brush motor, if an electric current is applied to the rotor coil 85 via the brush 88 and the commutator 87, the rotor core is given rotational force by a magnet 86 fixed on the outer circumferential side and rotates. Moreover, the electric current is switched by the commutator 87 and the brush 88 according to the rotational position of the rotor coil 85, so that smooth rotational driving is made possible, and a DC motor can therefore be organized.

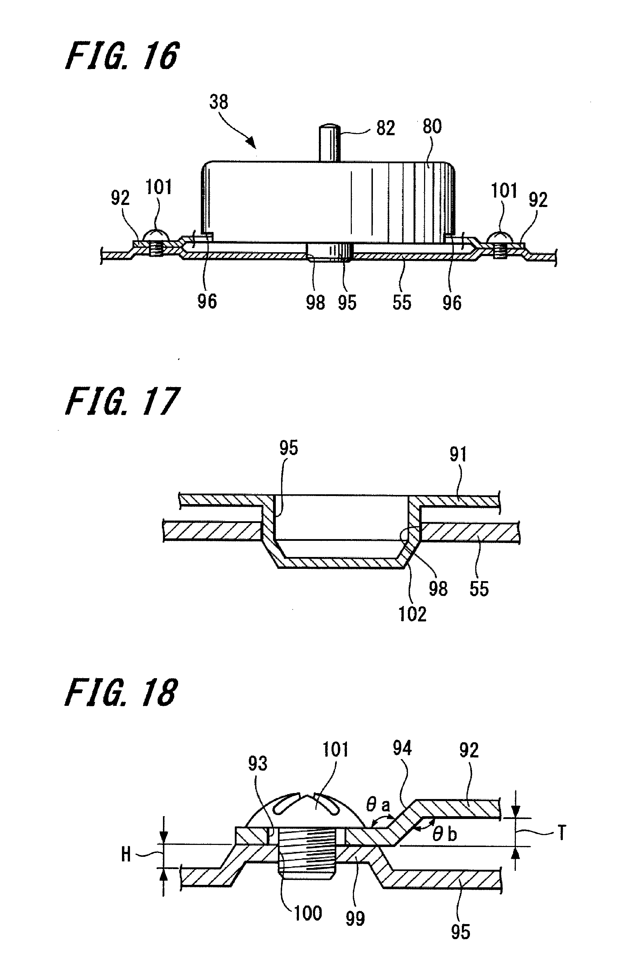

Such a motor 38 is attached to the attachment member (mounting plate) 55 as shown in FIGS. 16 to 18. A circular positioning hole (depressed portion) 98 is formed in the attachment member 55 to correspond with the central position of the motor 38, and an outer circumferential part of a fitting portion 95 formed at a central part of the attachment board 91 is fitted into this positioning hole 98, thereby adjusting the position of a central part of the motor 38 with respect to a radial direction. Additionally, a part at an outer circumferential part and on an end side of the fitting portion 95 of the attachment board 91 is formed as an inclined surface as shown in FIG. 17, thereby smoothly deciding the positions of the outer circumferential part of the fitting portion 95 and the positioning hole 98 of the attachment member 55 during fitting of the motor 38.

Also, a part on an end side of each arm 92 formed extending toward the outer circumferential side on the attachment board 91 is fixed to a projection 99 on the attachment member 55 with a machine screw 101 as shown in FIG. 18. The position of this motor with respect to a height-related direction is adjusted by the projection 99 on the attachment member 55. A protrusion amount H of the projection 99 is employedused to adjust the height of the motor 38. And each arm 92 is fastened to the attachment member 55, by screwing the machine screw 101, inserted through a machine screw insertion hole 93 of the arm 92, to a screw hole 100 of the attachment member 55.

In particular, the three arms 92 are provided with the bent portions 94 nearer to the root side than their machine screw insertion holes 93 and in their middle positions with respect to a longitudinal direction; and by adjusting the curvature angles θa and θb of these bent portions 94, it is possible to adjust the inclination amount of the rotor shaft of this motor 38, particularly the verticality of the rotor shaft 82. Specifically, regarding each motor 38, the curvature angles of the bent portions 94 of the three arms 92 are adjusted, and a height T of each arm is changed, thereby adjusting the verticality of the rotor shaft of the motor 38.

As just described, a motor 38 according to an embodiment of the present invention relates to a brush motor in which radial bearings 83 and 84 are disposed separately from each other between a housing 80 and an attachment board 91. The upper bearing 83 is attached to a central hole of the housing 80 and the lower bearing 84 attached to the attachment board 91. In order to attach this motor 38 to an attachment member (mounting plate) 55 accurately, the fitting portion 95 is formed in the attachment board 91, and an outer circumferential part of this fitting portion 95 serves as a guide portion. Also, in order to adjust the inclination of a rotor shaft 82, a plurality of arms 92 which can form level surfaces are placed contiguously to the attachment board 91, and the inclination of the rotor shaft is prevented by utilizing deformation of bent portions 94 of the arms 92 fixed to this attachment board 91.

Since it is necessary for a DC brush motor to have a commutator 87, which touches a brush 88 in a sliding manner, at the midpoint of the rotor shaft 82, the radial bearings 83 and 84 may have to be vertically separated from each other. For that reason, if there is unevenness in caulking between the housing 80 where the upper bearing 83 is attached and the attachment board 91 where the lower bearing 84 is attached, there may be inclination of the rotor shaft 82 arising. If an attachment is conducted by means of the housing 80, it may be impossible to adjust the inclination of the rotor shaft 82 after the housing 80 has been mounted on the board 91 in caulking.

An embodiment of the present invention is a brush motor in which there are bearings 83 and 84 vertically separated, wherein an attachment board 91 is provided with a fitting portion 95 for correcting the central position of a rotor shaft 82 accurately, and an outer circumferential part thereof is employed for deciding the correct position. Also, three arms 92 are extended on the attachment board 91, and the verticality of the rotor shaft 82 is raised by adjusting the curvature angles of these arms 92.

According to the structure, a low-priced DC brush motor can be employed as a spindle motor 38, thereby reducing the cost of a disk player. Also, an attachment boss and a middle attachment chassis for attaching the motor 38 are not necessary, so that the number of components is reduced. Also, it is possible to raise precision by deciding the central position of a motor accurately. In addition, even after the motor has been assembled, the verticality of the rotor shaft 82 can be adjusted by adjusting the curvature amount of the bent portions 94 of the arms 92, thereby improving assembly precision.

The present invention has been described above, with reference to the embodiments shown in the drawings; however, it is not that the present invention is confined to the embodiments, but that various modifications are possible within the scope of technical ideas of the present invention. For example, although the embodiments relate to a spindle motor of a changer-attached disk player and an attachment structure thereof, the present invention can be applied to various other spindle motors or DC motors employed for other purposes, and attachment structures thereof.

The present invention can be utilized in attaching a spindle motor of a disk player.

It should be understood by those skilled in the art that various modifications, combinations, sub-combinations and alterations may occur depending on design requirements and other factors insofar as they are within the scope of the appended claims or the equivalents thereof.

## Claims

1. A DC motor comprising: a substantially cup-shaped housing (80); and an attachment board (91) which closes an opening of said housing, and to which the motor is attached in a predetermined position; wherein
said attachment board (91) has a fitting portion (95) which is provided at a central part thereof, and to which a bearing on one side of a rotor shaft placed in the housing (80) is fitted, and
an arm (92) formed protruding in a radial direction at an outer circumferential part of said attachment board, and fastened to an attachment member.

2. A DC motor according to Claim 1, wherein said arm (92) is bent in its middle position with respect to a longitudinal direction thereof, and the inclination of said rotor shaft is corrected according to the curvature amount of said arm (92).

3. A DC motor according to Claim 1 or 2, wherein the fitting portion (95) to which a bearing portion on one side of the rotor shaft stored in the housing is fitted and which protrudes outward in an axial direction is integrally provided at a central part of said attachment board (91).

4. A DC motor according to Claim 1, 2 or 3, wherein a commutator is attached to said rotor shaft, said rotor shaft is supported in a rotatable manner by bearings at both ends with respect to an axial direction thereof, and one bearing is attached to said attachment board while the other bearing is attached to the housing.

5. A DC motor according to one of the claims 1 to 4, wherein an circular positioning hole or a depressed portion is formed in the attachment member where the motor is attached, and the position of a central part is decided as an outer circumferential part of the fitting portion of said attachment board is fitted into the circular positioning hole or the depressed portion of said attachment member.

6. A DC motor according to Claim 2, wherein there is provided an arm (92) including a bent portion (94) having an inclined surface on an outer part of the fitting portion of said attachment board (91).

7. An attachment structure of a DC motor in which there is a rotor shaft whose both ends with respect to an axial direction thereof are supported by bearings, and a rotor and a commutator are provided between bearings of both sides of said rotor shaft; wherein one of said bearings is attached to a housing (80) and the other attached to an attachment board (91) which closes an opening of said housing, and an arm placed contiguously to said attachment board in such a manner as to protrude toward an outer part with respect to a radial direction is attached to an attachment member.

8. An attachment structure of a DC motor according to Claim 7, wherein said one bearing is fitted in a central hole of the housing, and said the other bearing is fitted to a fitting portion of said attachment board.

9. An attachment structure of a DC motor according to Claim 7 or 8, wherein said arm is attached to an attachment member, being bent in its middle position, in order to adjust the verticality of said rotor shaft.

10. An attachment structure of a DC motor according to Claim 7, 8 or 9, wherein said attachment member is formed of a projection, and height adjustment is conducted according to the protrusion amount of said projection.

11. An attachment structure of a DC motor according to one of the claims 7 to 10, wherein said DC motor is a spindle motor which directly drives a disk-like recording medium.
